# EUROPEAN PATENT SPECIFICATION

(11) **EP 2 816 330 B1**
(45) Date of publication and mention of the grant of the patent: **11.11.2020**
(21) Application number: 14173321.2
(22) Date of filing: 20.06.2014
(51) Int. Cl.: G01F 23/00, G01F 23/18, G01F 23/296

(54) **Wireless fuel sensor system**
Drahtloses Kraftstoffsensorsystem
Système de capteurs de carburant sans fil

(30) Priority: 21.06.2013 US 201313923657
(43) Date of publication of application: 24.12.2014
(73) Proprietor: Simmonds Precision Products, Inc., Vergennes, VT 05491 (US)
(72) Inventor: Hicks, Brandon, Lexington, MA 02421 (US); Kline, Bruce R, Starksboro, VT 05487 (US)
(74) Representative: Dehns

(56) References cited:
- EP-A1- 2 642 259
- EP-A1- 2 720 006
- EP-A2- 0 690 293
- EP-A2- 2 482 352
- WO-A2-2008/051322
- DE-A1-102009 038 925
- US-A1- 2012 167 676

## Description

The present disclosure relates to fuel sensors for an aircraft, and more specifically, to wireless fuel sensors for aircrafts.

Currently, aircraft fuel gauges use capacitance probes mounted within the fuel tanks to monitor the amount of fuel in the tank. In general, these probes are disposed inside the fuel tank and extend from the bottom to the top of the tank. Accordingly, wires must be routed within the tank to excite and read the probes. For a variety of reasons, such as safety, maintenance, and construction reasons, it is desirable to eliminate the long probes and wiring within the fuel tanks.

Recently, pressure and ultrasonic sensors have been developed to eliminate the use of long conductive probes disposed inside of fuel tanks. Currently, optical fibers or external mounting can be used to eliminate the use of conductive wires in the tank. While the use of externally mounted sensors works well for some sensor locations, external placement of a fuel sensor on certain parts of a wing tank forces wires or optical cable to be routed in the airflow. In addition, the use of long conductive wires along the wings of the aircraft, adjacent to the fuel tank, poses various safety concerns.

EP 0 690 293 A2 discloses a fluid level sensing apparatus for detecting the fluid level in a container. EP 2 642 259 A1, EP 2 720 006 A1, and US 2012/0167676 A1 disclose sensors in a fuel system.

According to the present invention, there is provided an aircraft having a fuel tank disposed in a wing and a wireless fuel sensor system comprising: a plurality of wireless fuel sensors each comprising: a sensor configured to measure an indication of an amount of fuel in the fuel tank; a transmitter coupled to the sensor; an antenna coupled to the transmitter; and a battery and a generator configured to provide power to the sensor and the transmitter, wherein the generator is configured to harvest energy from the operating environment of the aircraft; and a controller configured to receive data from each of the plurality of wireless fuel sensors and to responsively calculate the amount of fuel in the fuel tank; wherein the plurality of wireless fuel sensors are mounted on the inside of the fuel tank and the tank wall includes a radio frequency window allowing communication.

Additional features and advantages are realized through the techniques of the present invention. Other embodiments and aspects of the invention are described in detail herein and are considered a part of the claimed invention. For a better understanding of the invention with the advantages and the features, refer to the description and to the drawings.

The subject matter which is regarded as the invention is particularly pointed out and distinctly claimed in the claims at the conclusion of the specification. The foregoing and other features, and advantages of the invention are apparent from the following detailed description of preferred embodiments taken in conjunction with the accompanying drawings in which:
FIG. 1 is a schematic diagram of a portion of an aircraft having a wireless fuel sensor system in accordance with an exemplary embodiment of the disclosure;
FIG. 2 is a block diagram of a wireless fuel sensor in accordance with an exemplary embodiment of the disclosure; and
FIG. 3 is a schematic diagram illustrating a wireless fuel sensor.

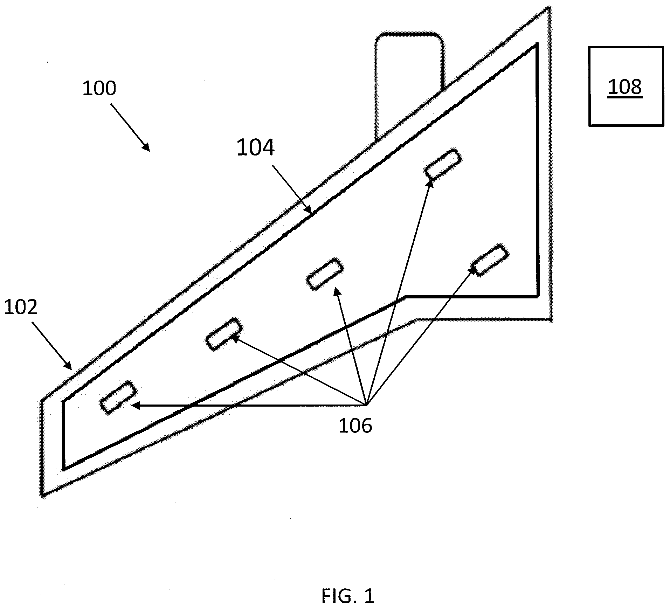

Referring now to FIG. 1, a schematic diagram of a portion of an aircraft having a wireless fuel sensor system 100 in accordance with a preferred embodiment of the disclosure is shown. In one embodiment, the aircraft includes a fuel tank 104 disposed within a wing 102 of the aircraft. The wireless fuel sensor system 100 includes a plurality of wireless fuel sensors 106 that are disposed at various locations along a surface of the fuel tank 104. In an embodiment, each of the wireless fuel sensors 106 is configured to communicate with a controller 108, which is configured to calculate the amount of fuel in the tank 104 based on the information it receives from the wireless fuel sensors 106.

In one embodiment, the wireless fuel sensor system 100 includes several wireless fuel sensors 106 that are positioned to provide an accurate measurement of the amount of fuel in the fuel tank 104, over all flight attitudes, with the minimum number of sensors. The usage of each of the wireless fuel sensors 106 may depend on the location of the wireless fuel sensor 106 within the fuel tank 104. Each wireless fuel sensor 106 may be used as a primary sensor or as a secondary sensor used to increase the accuracy of the wireless fuel sensor system 100 when the fuel level is low. In one embodiment, by avoiding using the wires needed by wired fuel sensors, the wireless fuel sensors 106 are able to be located in all areas of the aircraft.

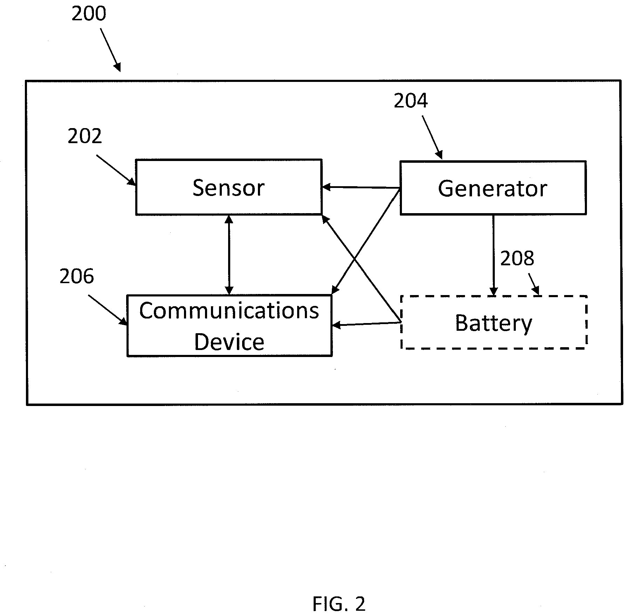

Referring now to FIG. 2, a block diagram of a wireless fuel sensor 200 in accordance with an embodiment of the disclosure is shown. As illustrated, the wireless fuel sensor 200 includes a sensor 202 and a communications device 206. The wireless fuel sensor 200 includes a generator 204. The wireless fuel sensor also includes a battery 208 configured to receive and store power from the generator 204, or merely to provide storage for energy without regeneration. In one embodiment, the sensor 202 may be a pressure sensor, an ultrasonic sensor, or any other suitable type of sensor that is capable of measuring an amount of fuel in a portion of the fuel tank. In one embodiment, the sensor 202 may be a pressure sensor that has a sampling rate of five or more samples per second. In another embodiment, the sensor 202 may be an ultrasonic sensor that has a similar sampling rate. In various embodiments, the sampling rates of the sensor 202 may be set to a rate high enough to average out the effects of the fuel sloshing in the tank.

The generator 204 is configured to harvest energy from the operating environment of the aircraft. For example, the generator 204 may be configured to convert thermal, vibration, solar, or other types of energy into electrical power. The generator 204 may be configured to provide electrical power directly to the sensor 202 and the communications device 206 or may be configured to provide electrical power to the battery, which in turn powers the sensor 202 and the communications device 206.

In one embodiment, the communications device 206 includes a radio frequency (RF) transmitter and may also include a RF receiver. In one embodiment, the wireless fuel sensor 200 may be configured to only be a data source, and be configured without a receiver to minimize energy usage. In one embodiment, the communications device 206 is configured to use a low rate, low overhead communication protocol like IEEE 802.15.4. By using such a communications protocol, the amount of energy used by the communications device 206 is decreased and allows for the highest possible sample rate while minimizing energy used. In embodiments in which the communications device 206 includes both an RF transmitter and receiver, full bidirectional communication can be added to the wireless fuel sensor 200 to allow advanced functionality.

In one embodiment, the communications device 206 includes an antenna that may or may not protrude beyond the tank wall depending on the type of antenna used. In various embodiments, the antenna may include, but is not limited to, a patch antenna, a slot antenna, a traveling wave antenna, folded and unfolded dipoles and monopoles. In one embodiment, the antenna is aerodynamically shaped and/or enclosed within an aerodynamic radome.

In one embodiment, the generator 204 is a thermoelectric generator that is thermally connected such that heat flows from the fuel in the tank, through a heat conductor, through the thermoelectric generator, and into the air. The direction of heat flow depends on the temperatures of the fuel and the air. In general, the outside air temperature drops below that of the fuel as the aircraft ascends, the fuel cools while cruising at altitude, and the outside air temperature rises above the temperature of the fuel as the aircraft descends.

In one embodiment, the wireless fuel sensor 200 may be designed to operate only when power is being supplied from the generator 204. For example, the wireless fuel sensor 200 may only operate when the generator 206 is providing power. In such embodiments, the wireless fuel sensor 200 is configured to augment other sensors to improve general accuracy, improve accuracy over attitude, reduce errors due to baffles and other tank features, and enhance reliability and availability through redundancy. In another embodiment, the wireless fuel sensor 200 may be designed to use energy that has been previously generated and stored in the battery 208. The previously stored energy will be available during flight when the sensors are needed, even if the generator 204 is not currently supplying power, for example during the cruise phase of the flight.

The wireless fuel sensor 200 may access thermal gradients, thermal changes, or vibration energy to harvest. The wireless fuel sensor 200 is mounted on the inside of the fuel tank and the tank wall includes an RF window allowing communication.

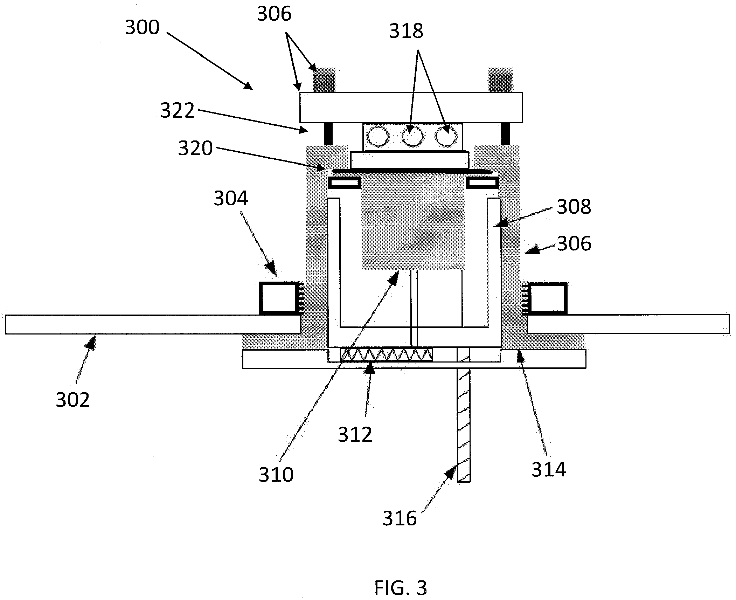

Referring now to FIG. 3, a block diagram of a wireless fuel sensor 300 is shown. As illustrated, the wireless fuel sensor 300 is affixed to a fuel tank wall 302 by multiple flange nuts 304. In one embodiment, the tank wall 302 is the bottom skin of a wing tank. The flange nuts 304 and the flange 314 are configured to ensure that the fuel tank is properly sealed. The wireless fuel sensor 300 includes a housing 306, which may include several pieces or have a uni-body construction. The housing 306 is configured to engage the flange nuts 304 that are disposed in the fuel tank and to have an opening 322 configured to allow the fuel in the tank to reach one or more apertures 318. The wireless fuel sensor 300 also includes a sensor module 310 that includes sensors, such as pressure transducers, configured to measure the amount of fuel in the tank. In one embodiment, the sensors of the sensor module 310 are disposed in the apertures 318. In one embodiment, the sensor module 310 also includes other electronics such as a receiver and transmitter.

Continuing with reference to FIG. 3, the wireless fuel sensor 300 includes a thermoelectric generator 312 which is disposed next to a conductor 308. The thermoelectric generator 312 is configured to generate electric power and to provide it to the sensor module 310. In one embodiment, the wireless fuel sensor 300 includes an antenna 316 which is in communication with the sensor module 310. During operation, the sensor module 310 receives power from the thermoelectric generator 312 and measures the amount of the fuel in the tank using its one or more sensors. The sensor module 310 periodically transmits the measurement data via the antenna 316.

In one embodiment, the wireless fuel sensor includes an energy storage device and is configured to use a wake on RF system. The wake on RF system allows the wireless fuel sensor to sleep and save the stored energy when not needed and to wake and operate from the stored energy at any time regardless to the availability of energy from the generator. In one embodiment, the wake on RF system can be added to the wireless fuel sensor to control when a sample is taken and transmitted. The wake on RF system can be enhanced to request specific data such as fuel pressure, echo time, temperature, and sensor health.

While the invention has been described in detail in connection with only a limited number of embodiments, it should be readily understood that the invention is not limited to such disclosed embodiments. Accordingly, the invention is not to be seen as limited by the foregoing description, but is only limited by the scope of the appended claims.

## Claims

1. An aircraft having a fuel tank disposed in a wing and a wireless fuel sensor system (100) comprising:
a plurality of wireless fuel sensors (106;200;300) each comprising:
a sensor (202;310) configured to measure an indication of an amount of fuel in the fuel tank (104);
a transmitter (206) coupled to the sensor;
an antenna (316) coupled to the transmitter; and
a battery (208) and a generator (204;312) configured to provide power to the sensor and the transmitter, wherein the generator is configured to harvest energy from the operating environment of the aircraft; and
a controller (108) configured to receive data from each of the plurality of wireless fuel sensors and to responsively calculate the amount of fuel in the fuel tank;
wherein the plurality of wireless fuel sensors are mounted on the inside of the fuel tank and the tank wall includes a radio frequency window allowing communication.

2. The aircraft of claim 1, wherein the generator (204; 312) is configured to provide the power to the sensor (202; 310) and the transmitter (206).

3. The aircraft of claim 1 or 2, wherein the generator (204;312) is a thermoelectric generator.

4. The aircraft of claim 1 or 2, wherein the generator (204) is a photoelectric generator.

5. The aircraft of claim 1 or 2, wherein the generator (204) is a vibration energy harvester.

6. The aircraft of any of claims 1 to 5, wherein each of the plurality of wireless fuel sensors (106;200;300) are configured to periodically transmit the indication of the amount of fuel in the fuel tank (104) to the controller (108).

7. The aircraft of any preceding claim, wherein each of the plurality of wireless fuel sensors (106;200;300) further comprises a receiver configured to receive commands from the controller (108).

8. The aircraft of claim 7, wherein the receiver is configured to receive a wake signal from the controller (108).

9. The aircraft of claim 8, wherein each of the plurality of wireless fuel sensors (106;200;300) are configured to transmit the indication of the amount of fuel in the fuel tank (104) to the controller (108) in response to receiving the wake signal from the controller.

## Patentansprüche

1. Luftfahrzeug mit einem Kraftstofftank, der in einem Flügel angeordnet ist, und einem drahtlosen Kraftstoffsensorsystem (100), umfassend:
eine Vielzahl von drahtlosen Kraftstoffsensoren (106; 200; 300), die jeweils Folgendes umfasst:
einen Sensor (202; 310), der dazu konfiguriert ist, eine Angabe einer Menge von Kraftstoff in dem Kraftstofftank (104) zu messen;
einen Sender (206), der an den Sensor gekoppelt ist;
eine Antenne (316), die an den Sender gekoppelt ist; und
eine Batterie (208) und einen Generator (204; 312), die dazu konfiguriert sind, dem Sensor und dem Sender Leistung bereitzustellen, wobei der Generator dazu konfiguriert ist, Energie aus der Betriebsumgebung des Luftfahrzeugs zu gewinnen; und
eine Steuerung (108), die dazu konfiguriert ist, Daten aus jeder der Vielzahl von drahtlosen Kraftstoffsensoren zu empfangen und als Reaktion darauf, die Menge von Kraftstoff in dem Kraftstofftank zu berechnen;
wobei die Vielzahl von drahtlosen Kraftstoffsensoren an der Innenseite des Kraftstofftanks montiert ist und die Tankwand ein Funkfrequenzfenster beinhaltet, das eine Kommunikation erlaubt.

2. Luftfahrzeug nach Anspruch 1, wobei der Generator (204; 312) dazu konfiguriert ist, dem Sensor (202; 310) und dem Sender (206) Leistung bereitzustellen.

3. Luftfahrzeug nach Anspruch 1 oder 2, wobei der Generator (204; 312) ein thermoelektrischer Generator ist.

4. Luftfahrzeug nach Anspruch 1 oder 2, wobei der Generator (204) ein photoelektrischer Generator ist.

5. Luftfahrzeug nach Anspruch 1 oder 2, wobei der Generator (204) eine Vibrationsenergiegewinnungseinrichtung ist.

6. Luftfahrzeug nach einem der Ansprüche 1 bis 5, wobei jeder der Vielzahl von drahtlosen Kraftstoffsensoren (106; 200; 300) dazu konfiguriert ist, die Angabe der Menge von Kraftstoff in dem Kraftstofftank (104) an die Steuerung (108) periodisch zu senden.

7. Luftfahrzeug nach einem der vorstehenden Ansprüche, wobei jede der Vielzahl von drahtlosen Kraftstoffsensoren (106; 200; 300) ferner einen Empfänger umfasst, der dazu konfiguriert ist, Befehle von der Steuerung (108) zu empfangen.

8. Luftfahrzeug nach Anspruch 7, wobei der Empfänger dazu konfiguriert ist, ein Aktivierungssignal von der Steuerung (108) zu empfangen.

9. Luftfahrzeug nach Anspruch 8, wobei jeder der Vielzahl von drahtlosen Kraftstoffsensoren (106; 200; 300) dazu konfiguriert ist, die Angabe der Menge von Kraftstoff in dem Kraftstofftank (104) an die Steuerung (108) als Reaktion darauf zu senden, dass von der Steuerung das Aktivierungssignal empfangen wurde.

## Revendications

1. Aéronef ayant un réservoir de carburant disposé dans une aile et un système de capteurs de carburant sans fil (100) comprenant :
une pluralité de capteurs de carburant sans fil (106 ; 200 ; 300) comprenant chacun :
un capteur (202 ; 310) configuré pour mesurer une indication d'une quantité de carburant dans le réservoir de carburant (104) ;
un émetteur (206) couplé au capteur ;
une antenne (316) couplée à l'émetteur ; et
une batterie (208) et un générateur (204 ; 312) configurés pour fournir de l'énergie au capteur et à l'émetteur, dans lequel le générateur est configuré pour collecter l'énergie de l'environnement d'exploitation de l'aéronef ; et
un dispositif de commande (108) configuré pour recevoir des données de chacun de la pluralité de capteurs de carburant sans fil et pour calculer en réponse la quantité de carburant dans le réservoir de carburant ;
dans lequel la pluralité de capteurs de carburant sans fil sont montés à l'intérieur du réservoir de carburant et la paroi de réservoir comporte une fenêtre de radiofréquence permettant la communication.

2. Aéronef selon la revendication 1, dans lequel le générateur (204 ; 312) est configuré pour fournir l'énergie au capteur (202 ; 310) et à l'émetteur (206).

3. Aéronef selon la revendication 1 ou 2, dans lequel le générateur (204 ; 312) est un générateur thermoélectrique.

4. Aéronef selon la revendication 1 ou 2, dans lequel le générateur (204) est un générateur photoélectrique.

5. Aéronef selon la revendication 1 ou 2, dans lequel le générateur (204) est un collecteur d'énergie vibratoire.

6. Aéronef selon l'une quelconque des revendications 1 à 5, dans lequel chacun de la pluralité de capteurs de carburant sans fil (106 ; 200 ; 300) est configuré pour transmettre périodiquement l'indication de la quantité de carburant dans le réservoir de carburant (104) au dispositif de commande (108).

7. Aéronef selon une quelconque revendication précédente, dans lequel chacun de la pluralité de capteurs de carburant sans fil (106 ; 200 ; 300) comprend en outre un récepteur configuré pour recevoir des commandes du dispositif de commande (108).

8. Aéronef selon la revendication 7, dans lequel le récepteur est configuré pour recevoir un signal d'activation du dispositif de commande (108).

9. Aéronef selon la revendication 8, dans lequel chacun de la pluralité de capteurs de carburant sans fil (106 ; 200 ; 300) est configuré pour transmettre l'indication de la quantité de carburant dans le réservoir de carburant (104) au dispositif de commande (108) en réponse à la réception du signal d'activation du dispositif de commande.
